# EUROPEAN PATENT SPECIFICATION

(11) **EP 1 487 660 B1**
(45) Date of publication and mention of the grant of the patent: **18.07.2007**
(21) Application number: 03744577.2
(22) Date of filing: 14.03.2003
(51) Int. Cl.: B60W 10/04, B60W 10/10, B60W 30/14, B60K 31/00

(54) **SHIFT CONTROL IN MOTOR VEHICLES**
GANGSCHALTUNG IN KRAFTFAHRZEUGEN
VEHICULE A MOTEUR A TRANSMISSION AUTOMATIQUE

(30) Priority: 20.03.2002 SE 0200846
(43) Date of publication of application: 22.12.2004
(73) Proprietor: VOLVO LASTVAGNAR AB, 405 08 Göteborg (SE)
(72) Inventor: ERIKSSON, Anders, S-413 20 Göteborg (SE); STEEN, Marcus, S-424 33 Angered (SE)
(74) Representative: Hyltner, Jan-Olof
(86) International application number: PCT/SE2003/000429
(87) International publication number: WO 2003/078196

(56) References cited:
- EP-A1- 1 111 336
- US-A- 5 931 886
- US-A- 6 070 118
- US-B1- 6 242 873

## Description

The present invention relates to a motor vehicle with a clutch and automated transmission between the engine and the drive wheels of the vehicle, comprising a first electronic control means for controlling the engine, a second electronic control means for controlling the transmission in accordance with a selected position for a manual gear selector, where the control means with the gear selector in its position for automatic shifting, when starting off or under way, selects a gear which is determined by a gear selection strategy, stored in said second control means, as a function of parameters fed into the second control means.

In vehicles of this type there are today control units with a stored gear selector strategy, i.e. a time-based shifting sequence as a function of road incline, for example. A known technology is described in US-A-5 832 400. For vehicles with a conventional automatic transmission, where the transmission shifts sequentially with a torque converter, there is a gear selection strategy based on an algorithm which takes into account a measuring point in the topology surrounding the vehicle with instantaneous vehicle position as a reference point. By determining, by various methods, where the vehicle will be after a certain time interval, it is possible to modify the engine setting and the shifting points for the automatic transmission, i.e. at which rpm the transmission should shift up or down. Possible variants could be to use electronic maps together with a positioning system (e.g. a Global Positioning System, GPS) or extrapolate a future position for the vehicle. One disadvantage of this system is that it does not take into consideration how the road varies in elevation between two points of measurement, and extreme points (e.g. the crest of a hill) between the two points of measurement are thus not taken into account in certain cases. The engine and the transmission are set in accordance with the known technology, on the basis of how great the difference in elevation is between the two points of measurement, and the instantaneous throttle position. Throttle position means in this case and in the following text both an adjustable cruise control and an accelerator pedal.

US-A-5 832 400 only takes into consideration, as was mentioned, a single point of measurement during a certain time or distance into the future, in order to see if the instantaneous engine torque will be sufficient, or if the engine and/or transmission needs to be reset. It is also described how a plurality of points of measurement can be used but in that case a mean value thereof is used, thus providing one value for the required driving force. With a transmission which is shifted sequentially and with the method just described, there is an uncertainty in the system which results in tangible consequences in the form of less than satisfactory cruise control function, uneven acceleration and unnecessarily large exhaust emissions.

US-A-6 070 118 depicts a motor vehicle with a clutch and automated transmission between the engine and the drive wheels of the vehicle, comprising control means comprising an engine electronic control unit (E-ECU) for controlling an electronic throttle valve, a fuel injection unit and an ignition timing adjusting unit composed of a distributor and an igniter.

The vehicle according to US-A-6 070 118 also has an automatic transmission electronic control unit for controlling the automated transmission, where the transmission control unit is arranged to select a gear, which is determined by a shift pattern, stored in the control unit, as a function of various parameters fed into the control unit. Various shift patterns may be used, and each of these are directed to special modes, for example, normal, snow, etc. These shift patterns are static in their nature and thus results in drawbacks concerning flexibility.

The preamble of claim 1 is based on US-A-6 070 118.

US-A- 5 931 886 depicts a control system for a vehicular automatic transmission, wherein an estimated engine power required for the vehicle to travel a set route forms basis for determining one pre-stored shift control patterns among other, which minimizes fuel consumption on the set route.

The purpose of the present invention is to achieve a motor vehicle of the type described by way of introduction, which avoids the above mentioned problems by not compromising with a limited gear selection strategy, but rather reaches a decision about gear ratio with much better input, considering the future.

The invention is defined by the features of claim 1. Further aspects are outlined in the dependent claims.

The control means is adapted to select, with fed in parameters and thus at least knowledge of road incline and throttle position, but also engine, turbo and transmission characteristics, in accordance with a shifting strategy based on a number of computer simulations, a gear ratio in a drive chain on the basis of a criterium selected by the driver or externally in an automatic or semiautomatic manner, which according to the simulation provides the best optimisation for a given stretch of road.

Furthermore, the control unit selects a drive line gear ratio which results in lower emissions than what is achieved with known technology for the given stretch of road.

In a preferred embodiment, the second control unit is disposed, under set preconditions, to lay out a shifting schedule with automatic gear selection for a longer period forward (30 seconds or more), where the information on instantaneous position is obtained with the aid of GPS and/or where future positions are provided by information from an electronic map. The driver can himself select the criterion for driving, i.e. choose the relative weights of the controlling parameters. Controlling parameters include emissions, average speed or fuel consumption. If the driver, for example, prefers an optimized, economical driving model with low fuel consumption, the first weight is given to fuel consumption and the computer simulation will produce, for the given control parameter weighting, the most energy-saving shifting schedule. Furthermore, compromise solutions can be selected by giving the desired weightings for the respective control parameters. In order to provide additional precision in the simulation result, consideration is taken to the individual variations of the individual engine, since emissions from the engine can be measured when driving in various driving situations and these can be taken into consideration for future engine settings. Settings for the engine, for example, can vary along an imagined road picture, which the simulation is made for, in contrast to the known technology, where the engine setting has only two positions between an instantaneous position and a future position. The engine model is also important for providing information on engine exhaust emissions at various transients. Present known technology does not facilitate taking this into account. And shifting in the gearbox does not need to be done sequentially. The computer also simulates shifting sequences where one or more gears are skipped.

According to a first embodiment which uses GPS and electronic maps, simulations can be made which are valid relatively far into the future, but the risk of something unforeseen, i.e. about which information cannot be gotten from the electronic map, will consequently increase. The system has a sensibility, which, with the aid of extrapolation of the throttle opening position, can to a certain extent estimate in what position the throttle opening will be in a few seconds and how rapidly it is expected to move towards that position. This means that the system can adjust to a new situation earlier than known systems, which only consider the instantaneous throttle opening position.

In a second embodiment, with the aid of electronics and sensors, estimates, (extrapolations) can be made concerning road incline and information can thus be obtained on the topology surrounding the vehicle and its future position. In both embodiments, it is possible according to the present invention, to use information on surrounding vehicles, in order to be able to obtain a lower fuel consumption in a situation, for example, where one will catch up to a vehicle driving in front.

The present invention is preferably intended for, but is not limited to, automated manual transmissions. A significant difference in relation to the known technology (Automated Power Transmission) referred to, is that shifting in the present case takes place with force interruption. There is thus a clear advantage of using the system according to the invention, otherwise it is not certain that shifting up in an uphill incline will be successful, even if the driving force were theoretically sufficient because if the shifting takes too long, the vehicle will be retarded too much.

In the above description and in the following, it is stated that the various input data are fed into the second control unit which carries out the computer simulations. This function can, of course, also be taken over by the first control unit or in another physical location arranged for communication with the second control unit.

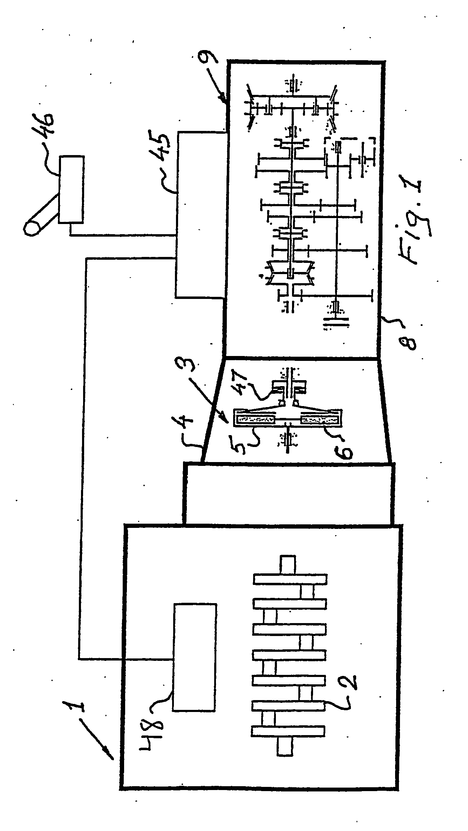

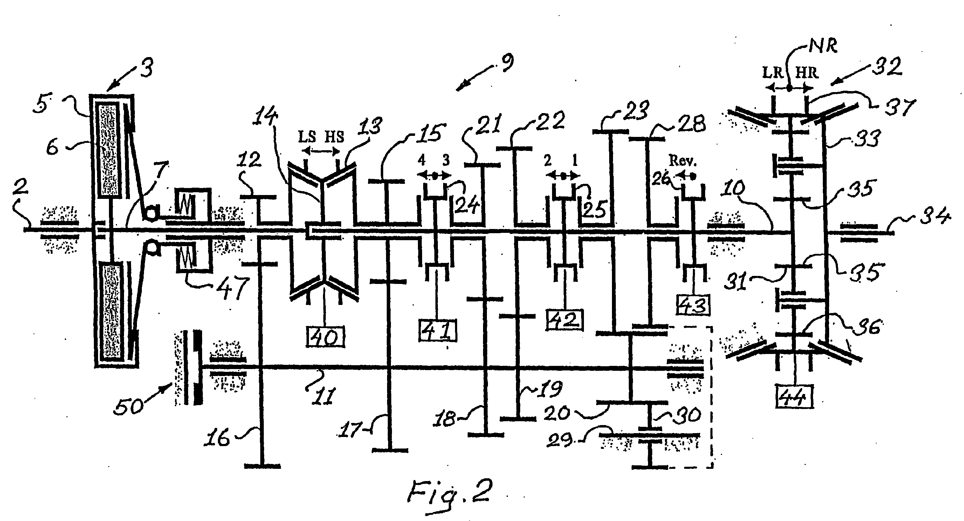

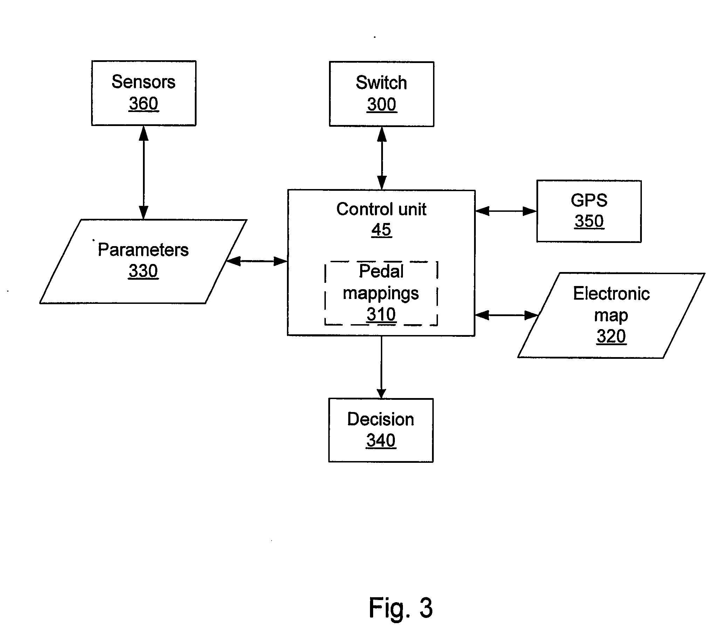

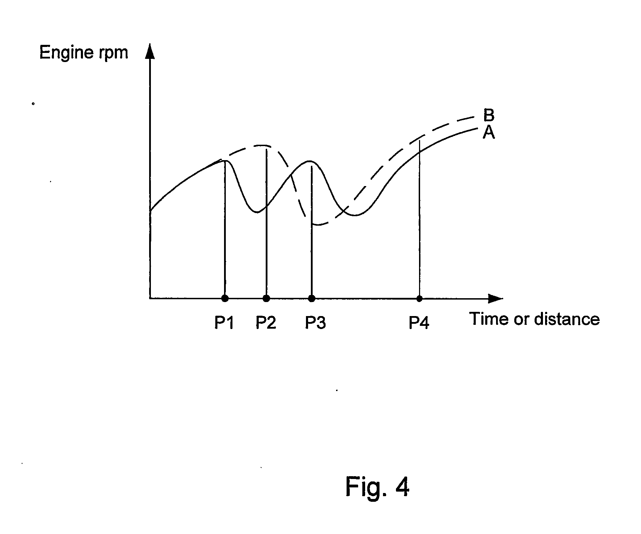

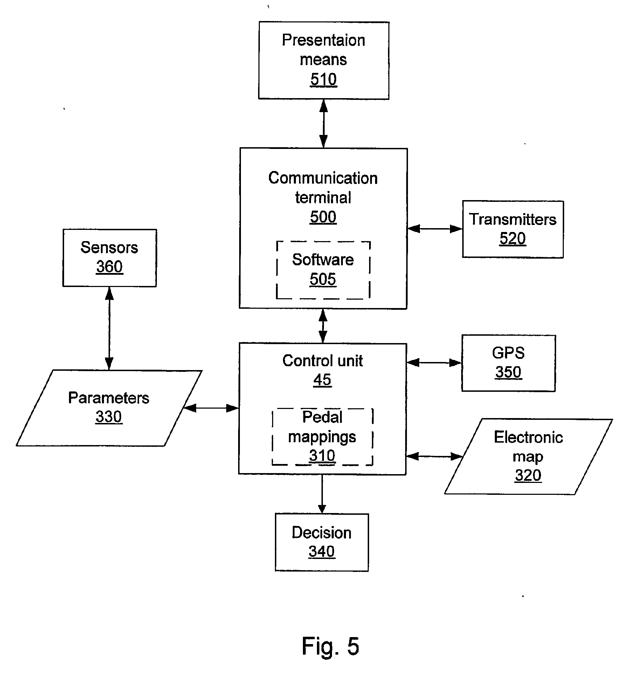

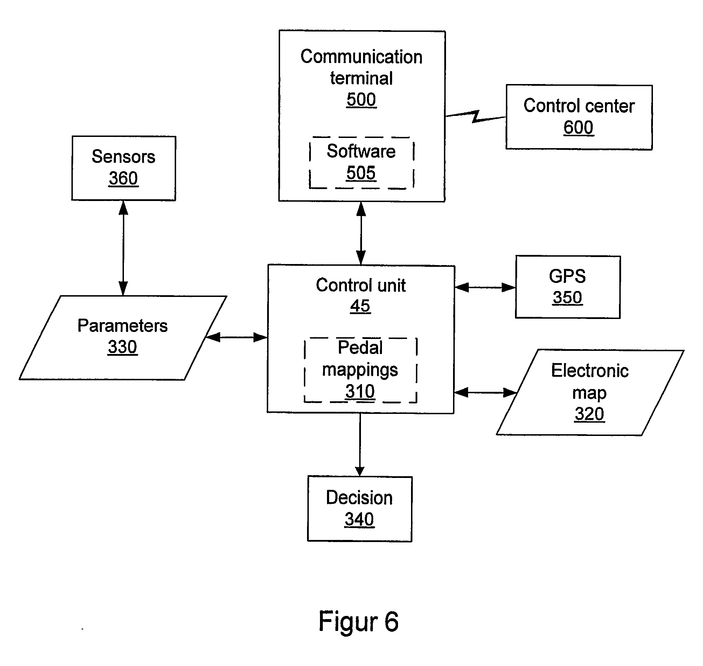

The invention will be described in more detail below with reference to examples shown in the accompanying drawings, where Fig. 1 shows a schematic representation of one embodiment of a drive unit according to the invention, Fig. 2 shows the clutch and the gearbox in Fig. 1 on a larger scale, and Fig. 3 shows an overview of inputs into the second control unit. Fig. 4 exemplifies parts of a simple computer simulation, Fig. 5 illustrates an embodiment where setting schemes for control parameters are fed from a communication terminal to a transmission control unit, and Fig. 6 shows a preferred embodiment of the present invention..

In Fig. 1,1 designates a six-cylinder internal combustion engine, e.g. a diesel engine, the crankshaft 2 of which is coupled to a single-plate dry disk clutch which is designated generally by reference number 3 and is enclosed in a clutch case 4. Instead of a single-plate disk clutch, a dual disk clutch can be used. The crankshaft 2 is connected non-rotatably to the clutch housing 5 of the clutch 3, while its disk plate 6 is connected non-rotatably to an input shaft 7 (Fig. 2), which is mounted rotatably in the casing 8 of a gearbox designated generally by reference number 9. A main shaft 10 (Fig. 2) and an intermediate shaft 11 (Fig. 2) are also mounted rotatably in the casing 8. Further, there are illustrated a first control unit 48 for controlling the engine, a second control unit for controlling the transmission and a manual gear-speed selector 46, coupled to the second control unit 45. The first and second control units (48 and 45, respectively) are adapted for communication with each other.

As can be seen most clearly from Fig. 2, a gear wheel 12 is mounted rotatably on the input shaft 7 and is lockable on the shaft by means of an engaging sleeve 13 which is provided with synchronizing means and is mounted non-rotatably but axially displaceably on a hub 14 connected non-rotatably to the input shaft 7. By means of the engaging sleeve 13, a gear wheel 15 mounted rotatably on the main shaft 10 is also lockable relative to the input shaft 7. The gear wheels 12 and 15 engage with gear wheels 16 and 17, respectively, which are connected non-rotatably to the intermediate shaft 11. Arranged in a rotationally fixed manner on the intermediate shaft 11 are further gear wheels 18, 19 and 20 which engage with gear wheels 21, 22 and 23, respectively, which are mounted rotatably on the main shaft 10 and are lockable on the main shaft by means of engaging sleeves 24 and 25, respectively, which, in the illustrative embodiment shown, do not have synchronizing arrangements. A further gear wheel 28 is mounted rotatably on the main shaft 10 and engages with an intermediate gear wheel 30, which is mounted rotatably on a separate shaft 29 and engages in turn the intermediate shaft gear wheel 20. The gear wheel 28 is lockable on its shaft by means of an engaging sleeve 26.

The gear wheel pairs 12, 16 and 15, 17 and also the engaging sleeve 13 form a split gearing with a low gear stage LS and a high gear stage HS. The gear wheel pair 15, 17 also forms, together with the gear wheel pairs 21, 18, 22, 19, 23, 20 and 28, 30, a basic gearbox with four forward gears and one reverse gear. Arranged in a rotationally fixed manner on the output end of the main shaft is a gear wheel 31 which forms the sun gear in a two-stage range gear of the planetary type designated by reference number 32, the planet wheel carrier 33 of which is connected in a rotationally fixed manner to a shaft 34 which forms the output shaft of the gearbox. The planet wheels 35 of the range gear 32 engage with a ring gear 36, which, by means of an engaging sleeve 37, is lockable relative to the gearbox casing 8 (Fig. 1) for low range LR and relative to the planet wheel carrier 33 for high range HR. The engaging sleeve also has a neutral position NR between the gear positions LR and HR. In the neutral position NR the output shaft 34 is released from the main shaft 10.

The engaging sleeves 13, 24, 25, 26 and 37 are displaceable as shown by the arrows in Fig. 2, to provide the gear stages shown next to the arrows. The displacement is brought about by servo devices 40, 41, 42, 43 and 44 which are indicated diagrammatically in Fig. 2 and may be pneumatically operated piston/cylinder arrangements of the type used in a gearbox of the type described above, which is marketed under the name Geartronic®. The servo devices are controlled by an electronic control unit 45 (Fig. 1), comprising a microcomputer, depending on signals fed into the control unit representing the various engine and vehicle data which comprise at least engine speed, vehicle speed, throttle pedal position and, in this case, engine brake on/off, when an electronic gear selector 46 coupled to the control unit 45 (Fig. 1) is in its automatic transmission position. When the selector is in the position for manual shifting, shifting is effected via the gear selector 46 (Fig. 1) at the command of the driver. The control unit 45 (Fig. 1) also controls fuel injection, that is to say the engine speed and/or engine torque, depending on the throttle pedal position, and also the air supply to a pneumatic piston/cylinder arrangement 47, by means of which the clutch 3 is engaged and disengaged.

The control unit 45 is programmed in a known manner so that it keeps the clutch 3 engaged when the vehicle is standing still and the gear selector 46 is in the neutral position. This means that the engine drives the input shaft 7 and thus also the intermediate shaft, while the output shaft 34 is disengaged. An auxiliary unit, e.g. an oil pump for lubricating the gearbox, can possibly be driven by the intermediate shaft in this position. The control unit 45 is also programmed, when the vehicle is standing still and the gear selector is moved from the neutral position to a shift position, either to a position for automatic shifting or to a position with a start-off gear selected by the driver, to first release the clutch 3, then brake the intermediate shaft 11 to stop with the aid of the intermediate shaft brake 50, indicated in Fig. 2, which can be a brake device, which can be known per se, controlled by the control unit 45. With the intermediate shaft 11 braked to stop or at least nearly to stop, the control unit 45 now initiates the shift in the basic gearbox to a gear ratio which is provided by the automatic shifter or selected by the driver. When the driver, after engaging the gear, opens the throttle, the accelerator pedal functions as a reverse clutch pedal, which, via the control unit, gradually increases the clutch engagement with increasing throttle opening.

Fig. 3 illustrates schematically input which the second control unit 45 needs to be able to generate a computer simulation. With one control 300 for manual or automatic control parameter weighting, providing a driving criterion selected by the driver, the simulation can be controlled in the present invention. The driver can select to prioritize, for example, low fuel consumption (for economical driving, for example), constant vehicle speed (for rapid driving at high average speed, for example), a certain level of emissions (for environmentally friendly driving) or a combination (weighting) of said control parameters. For automatic control parameter weighting, a model stored in the second control unit is used, which takes into consideration various parameters, such as throttle opening position, the mass of the vehicle and resistance to travel. The weighting of the control parameters, is different for different gear speeds. For example, low fuel consumption has high priority for high gears, and a heavy vehicle driving uphill has a high weighting for average speed. The switch 300 is adapted for communication with the second control unit 45. Pedal mappings 310, i.e. engine torque as a function of rpm for various throttle opening positions, are stored in the second control unit 45. An electronic map 320, for example stored on a CD-ROM (Compact Disc Read Only Memory) contains the information on a region's topology necessary for the computer simulation, i.e. at least gradients or elevation values for the route, with sea level as a reference, for example, and any information concerning speed limits along the route. The computer simulation uses parameters 330 sent from meters and sensors 360, in accordance with known technology. These consist at least of vehicle or train weight, instantaneous vehicle speed, gear ratios, degrees of efficiency, engine rpm, throttle opening position (even throttle opening position change), instantaneous position, road incline (not from electronic map), ambient temperature (which affects the fuel/air mixture), driving resistance and the engine dynamics of the engine. Driving resistance refers to a value computed by the second control unit in response to signals indicating instantaneous engine torque and instantaneous vehicle acceleration and mass, constituting an indication of road incline, any tailwind or headwind and the rolling resistance of the vehicle. Furthermore, consideration can also be taken to information on the speed of the preceding vehicle. In the second control unit 45, there are engine models including steady state torque, which is the torque, which the engine can deliver steadily at a given operational point, i.e. where so-called transients to get to the operational point have been left out. With the necessary information, the second control unit 45 can compute (simulate over a certain, predetermined time) i.a. fuel consumption, average speed and emissions (both exhaust and noise emissions), for a set of different gears and shifting schedules by solving equations with simulations and time increments. The best gear is selected by comparing computed fuel consumption, average speed and emissions or combinations of these, on the basis of a criterion selected by the driver, with matrices stored in the second control unit 45. Furthermore, Fig. 3 shows a symbol for GPS 350, which communicates with the second control unit, possibly also through the sensors 360. As an output from the second control unit 45, there is sent a decision 340, i.e. a gear selection.

Fig. 4 illustrates, in its most simple form, to simulate curves for a given traffic situation and a given vehicle state, i.e. where all of the parameters necessary for the computer simulation and the surrounding topology of the vehicle are known, two simulated curves. The figure shows how the engine rpm, when shifting, is dependent on time or distance. The curve A (the solid line) represents a case after acceleration when shifting is effected at P1 from third gear to fourth gear. At the break in driving force after the shifting, the engine rpm drops but increases after a certain period again when the gear is engaged and acceleration takes over. The engine rpm once again increases and there is a new shifting from fourth gear to fifth gear at P3, whereafter the engine rpm again drops and increases again after a certain period. Curve B (the dashed line) represents another shifting sequence but for the same given traffic situation and vehicle state. In this case, a shifting at P2 from third gear directly to fifth gear is simulated. The result of such a shifting sequence will be, as according to the given example, that the latter case according to the simulation model will provide a higher rpm at P4. Estimated fuel consumption, emissions and the like are computed in this example for both cases. Depending on which engine rpm and which criterion for driving has been selected, a decision on the shifting schedule, to optimally fulfil the desired criterion, is made in the second control unit 45.

Fig. 5 illustrates an embodiment of the present invention where a communications terminal 500, adapted for communication with the second control unit 45, permanently or temporarily, has been coupled to the second control unit 45, to effect data transfer as per below.

The communications terminal 500 comprises a hardware module such as a PC (personal computer), a hand-held computer, PDA, or similar hand-held device. The communications terminal 500 can even be a mobile terminal, such as a mobile phone, which does not need to be physically connected to the communication terminal 500, but which is in its vicinity. The communication between the communications terminal 500 and the second control unit 45 thus also comprises wireless communication, such as for example infrared (IR) technology or radio technology (RF technology) e.g. Blue Tooth. One or more mechanisms can be coupled to the data transferred, particularly between the communication terminal 500 and the second control unit 45. For example, encryption, digital signature, access control, data integrity, authentication exchange, notarisation or the like can be employed for secure data transfer.

Furthermore, the communication terminal 500 is adapted for communication with presentation means 510, for example a GUI (Graphical User Interface), a printer, a monitor, a touchscreen, or the like.

Stored in the communication terminal 500 is software 505, compatible with software stored in the control unit 45. The software 505 makes possible the feeding in of weighted control parameters. In other words, automatic (either dynamically adapted to circumstances or predetermined) changes in the control parameters are made possible.

Two cases are evident, but these are by no means the only ones:
1. For one or more given stretches of road, there are one or more predetermined schedules for control parameters stored either in a memory in the communication terminal 500, or in a database (not shown) coupled thereto, or on a carrier such as a CD-ROM the data thereon being transferred to the communications terminal 500. Alternatively, programming can be done manually, to provide a setting schedule for the control parameter weighting in the communications terminal 500. The second control unit 45, coordinates and processes the set control parameter weighting with information on position (GPS 350), surrounding topology (electronic map 320) and from sensor 360, as well as known parameters 330, in a manner described previously in accordance with the present invention, to shift (or not shift), i.e. to make a decision 340. The difference in relation to the embodiment shown in Fig. 3 is thus an automation and time-advance weighting of the control parameters. The programming can of course also be effected while moving, e.g. if a change is necessary due to erroneous programming (reprogramming), a route change (change of setting schedule) or the like.
2. The second case makes possible automatic, dynamic, control parameter weighting with external input. Transmitters 520 for this purpose, placed in the vehicle surroundings, e.g. along roads are adapted for communication with the communication terminal 500 send information on the current situation , and suitable or regulated control parameter weighting, to the communication terminal 500. Changes in the setting schedule for control parameter weighting are effected dynamically according to stored strategies. A transmitter, for example, can be placed at a city limit, and it sends, to the communication terminal 500, as the vehicle enters the city zone, a control parameter weighting in accordance with possible lower permissible levels for exhaust emissions for example. If priority is given to follow the control parameter weighting, the setting is changed thusly, possibly after manual confirmation via the communication terminal 500, and the vehicle can be automatically adapted to the new norms.

Fig. 6 illustrates an embodiment with central control. A control center 600, in the claims named command center, adapted for wireless communication with the communication terminal 500, can, in accordance with the present invention, give priority to economical driving (with low fuel consumption), a certain arrival time (weighting with regard to average speed) or certain emissions. The control center can be of the Fleet Management type, e.g. a coordinating center for a transport company. Communication can take place via a network medium, e.g. a tele-network or the internet using SMS, MMS, e-mail or another medium. Mechanisms mentioned in connection with Fig. 5 can also be coupled in here to provide secure transmission and implementation of information.

In this manner, a trucking company for example, or a municipal authority, can set, in the garage or on the road, the weighting of, or the maximum and/or minimum values of control parameters for exhaust emissions for example.

One advantage of this embodiment is that it facilitates adaptation to varying regional and local rules, norms, or laws. For example, prioritising low exhaust emissions can be easily programmed in and implemented in the model when entering an urban area with lower permissible emission levels than outside.

Another advantage of this embodiment is that a vehicle originally delivered with settings for a certain environmental class can be updated to fulfil more or less stringent emission requirements, especially exhaust emission requirements.

If maximum or minimum values of control parameters should be set too high or too low in relation to the performance which the vehicle is capable of, and prescribed operational limits, such information can be indicated in performance means 510. Tailor made software can also provide all relevant information, such as whether recommended operational limits have been exceeded.

## Claims

1. Motor vehicle with a clutch (3) and automated transmission (9) between the engine and the drive wheels of the vehicle, comprising control means (45, 48) which comprise a first electronic control unit (48) for controlling the engine and a second electronic control unit (45) for controlling the transmission in accordance with a selected position for an electronic gear selector (46);
where the second electronic control unit (45) with the gear selector in its position for automatic shifting, when starting off or under way, is arranged to select a gear, which is determined by a gear selection strategy, stored in the second electronic control unit (45) as a function of various parameters fed into the second electronic control unit (45);
**characterized in that**
the second electronic control unit (45) is adapted for communication with a communication terminal (500), and disposed, prior to starting off or under way, to receive at least one setting schedule for control parameter weighting from the communication terminal (500), wherein said at least one setting schedule comprises information about at least one control parameter chosen from a group comprising vehicle fuel consumption, vehicle speed and level of emissions; and
wherein said second electronic control unit (45) is arranged to continuously perform computer simulations depending upon at least one shifting schedule corresponding to a predetermined time of a future driving of the vehicle according to a model stored therein,
in order to select a shifting schedule which is optimal in view of said at least one setting schedule.

2. Motor vehicle according to Claim 1, **characterized in that** said first electronic control unit (48) for control of the engine and said second electronic control unit (45) for control of the transmission, both adapted for communication with each other.

3. Motor vehicle according to Claim 1, **characterized in that** the communication terminal (500) comprises a hardware module with dedicated software.

4. Motor vehicle according to Claim 1, **characterized in that** the communication terminal (500) is disposed for wireless reception of said at least one setting schedule from a command center (600).

5. Motor vehicle according to Claim 1, **characterized in that** the communication terminal (500) receives wirelessly said at least one setting schedule from one or more transmitters (520).

6. Motor vehicle according to Claim 1, **characterized in that** the instantaneous vehicle position is determined by a Global Positioning System unit (350) which is disposed for communication with the second electronic control unit (45).

7. Motor vehicle according to Claim 3, **characterized in that** the second electronic control unit (45) are disposed to be given information from an electronic map (320) on the topology surrounding the vehicle.

8. Motor vehicle according to Claim 1, **characterized in that** the second electronic control unit (45) are disposed to be given information from sensors (360), and, at least with knowledge of instantaneous vehicle position, speed and road incline, extrapolate through calculation, a future position of the vehicle.

## Patentansprüche

1. Kraftfahrzeug mit einer Kupplung (3) und einem automatisierten Getriebe (9) zwischen dem Motor und den Antriebsrädern des Fahrzeugs, umfassend Steuereinrichtungen (45, 48), die eine erste elektronische Steuereinheit (48) zum Steuern des Motors und eine zweite elektronische Steuereinheit (45) zum Steuern des Getriebes in Übereinstimmung mit einer ausgewählten Position für einen elektronischen Gangwähler (46) umfassen,
wobei die zweite elektronische Steuereinheit (45), mit dem Gangwähler in seiner Position für automatisches Umschalten, während des Startens oder in Bewegung eingerichtet ist, einen Gang zu wählen, der durch eine vorgegebene Gangauswahlplanung festgelegt ist, die in der zweiten elektronischen Steuereinheit (45) als eine Funktion von mehreren in die zweite elektronische Steuereinheit (45) gespeisten Parametern gespeichert ist,
**dadurch gekennzeichnet, dass**
die zweite elektronische Steuereinheit (45) für die Kommunikation mit einem Kommunikationsendgerät (500) eingerichtet ist und vor dem Starten oder in Bewegung sein eingerichtet ist, wenigstens ein Einstellungsschema für Steuerparametergewichtung von dem Kommunikationsendgerät (500) zu empfangen, wobei das wenigstens eine Einstellungsschema Informationen über wenigstens einen Steuerparameter umfasst, der aus einer Gruppe gewählt ist, die Fahrzeugkraftstoffverbrauch, Fahrzeuggeschwindigkeit und Fahrzeugemissionsmenge einschließt; und
wobei die zweite elektronische Steuereinheit (45) eingerichtet ist, um in Abhängigkeit von wenigstens einem Umschaltschema, zugehörig einer vorgegebenen Zeit eines zukünftigen Fahrens des Fahrzeugs, kontinuierlich Computersimulationen entsprechend einem darin gespeicherten Modell durchzuführen, um ein Umschaltschema auszuwählen, das in Bezug auf das wenigstens eine Einstellungsschema optimal ist.

2. Kraftfahrzeug nach Anspruch 1, **dadurch gekennzeichnet, dass** die erste elektronische Steuereinheit (48) zum Steuern des Motors und die zweite elektronische Steuereinheit (45) zum Steuern des Getriebes beide zum Kommunizieren miteinander eingerichtet sind.

3. Kraftfahrzeug nach Anspruch 1, **dadurch gekennzeichnet, dass** das Kommunikationsendgerät (500) ein Hardwaremodul mit zugehöriger Software umfasst.

4. Kraftfahrzeug nach Anspruch 1, **dadurch gekennzeichnet, dass** das Kommunikationsendgerät (500) für den drahtlosen Empfang des wenigstens einen Einstellungsschemas von einer Befehlszentrale (600) eingerichtet ist.

5. Kraftfahrzeug nach Anspruch 1, **dadurch gekennzeichnet, dass** das Kommunikationsendgerät (500) das wenigstens eine Einstellungsschema drahtlos von einem Sender (520) oder von mehreren Sendern (520) empfängt.

6. Kraftfahrzeug nach Anspruch 1, **dadurch gekennzeichnet, dass** die augenblickliche Fahrzeugposition durch eine Global-Positionsbestimmungssystem-Einheit (350) bestimmt wird, die für die Kommunikation mit der zweiten elektronischen Steuereinheit (45) eingerichtet ist.

7. Kraftfahrzeug nach Anspruch 3, **dadurch gekennzeichnet, dass** die zweite elektronische Steuereinheit (45) eingerichtet ist, von einer elektronischen Karte (320) Informationen über die das Fahrzeug umgebende Topologie zu bekommen.

8. Kraftfahrzeug nach Anspruch 1, **dadurch gekennzeichnet, dass** die zweite elektronische Steuereinheit (45) eingerichtet ist, Informationen von Sensoren (360) zu bekommen und, um wenigstens in Kenntnis der augenblicklichen Fahrzeugposition, der Fahrzeuggeschwindigkeit und des Streckengefälles, durch Berechnung eine zukünftige Position des Fahrzeugs hochzurechnen.

## Revendications

1. Véhicule à moteur doté d'un embrayage (3) et d'une transmission automatisée (9) entre le moteur et les roues motrices du véhicule, comprenant un moyen de commande (45, 48) qui contient une première unité électronique de commande (48), qui permet de commander le moteur, et une deuxième unité électronique de commande (45) qui permet de commander la transmission conformément à une position choisie d'un sélecteur électronique (46) de vitesse ; la deuxième unité électronique de commande (45), avec le sélecteur de vitesse dans sa position de changement de vitesse automatique, étant conçue pour sélectionner, au moment du départ ou en cours de route, une vitesse qui est déterminée par une stratégie de sélection de vitesse, stockée en mémoire dans la deuxième unité électronique de commande (45), en fonction de divers paramètres indiqués à la deuxième unité électronique de commande (45) ;
**caractérisé en ce que**
la deuxième unité électronique de commande (45) est adaptée pour pouvoir communiquer avec un terminal (500) de communication et elle peut recevoir, avant le départ ou en cours de route, au moins un programme de réglage correspondant à une pondération de paramètres de commande à partir du terminal (500) de communication, ledit au moins un programme de réglage comprenant des informations relatives à au moins un paramètre de commande choisi dans un ensemble comprenant la consommation de carburant du véhicule, la vitesse du véhicule et le niveau d' émissions ;
et dans lequel ladite deuxième unité électronique de commande (45) est adaptée pour réaliser continuellement des simulations informatiques en fonction d'au moins un programme de changement de vitesse correspondant à un instant prédéterminé d'une conduite ultérieure du véhicule, conformément à un modèle qui s'y trouve, afin de choisir un programme de changement de vitesse optimal en vue dudit au moins un programme de réglage.

2. Véhicule à moteur selon la revendication 1, **caractérisé en ce que** ladite première unité électronique de commande (48) destinée à la commande du moteur et ladite deuxième unité électronique de commande (45) destinée à la commande de la transmission sont toutes deux adaptées pour communiquer ensemble.

3. Véhicule à moteur selon la revendication 1, **caractérisé en ce que** le terminal (500) de communication comprend un module matériel comprenant un logiciel idoine.

4. Véhicule à moteur selon la revendication 1, **caractérisé en ce que** le terminal (500) de communication est conçu pour une réception sans fil dudit au moins un programme de réglage à partir d'un centre de commande (600).

5. Véhicule à moteur selon la revendication 1, **caractérisé en ce que** le terminal (500) de communication reçoit sans fil ledit au moins un programme de réglage à partir d'au moins un émetteur (520).

6. Véhicule à moteur selon la revendication 1, **caractérisé en ce que** la position instantanée du véhicule est déterminée par une unité (350) de GPS (*Global Positioning System),* conçue pour communiquer avec la deuxième unité électronique de commande (45).

7. Véhicule à moteur selon la revendication 3, **caractérisé en ce que** la deuxième unité électronique de commande (45) est conçue pour recevoir, à partir d'une carte électronique (320), des informations concernant la topologie entourant le véhicule.

8. Véhicule à moteur selon la revendication 1, **caractérisé en ce que** la deuxième unité électronique de commande (45) est conçue pour recevoir des informations à partir de capteurs (360) et au moins d'après la connaissance de la position instantanée du véhicule, de sa vitesse et de l'inclinaison de la route, pour extrapoler par calcul une position ultérieure du véhicule.
